# EUROPÄISCHE PATENTSCHRIFT

(11) **EP 3 411 211 B1**
(45) Veröffentlichungstag und Bekanntmachung des Hinweises auf die Patenterteilung: **21.07.2021**
(21) Anmeldenummer: 16708585.1
(22) Anmeldetag: 03.02.2016
(51) Int. Cl.: B29C 43/30, B29C 43/24, B29C 48/00, B29C 48/08, B29C 48/154, B29C 48/305, B29K 105/00, B29L 31/30, B05D 5/06, B05D 7/04

(54) **FOLIENHERSTELLUNGSVERFAHREN UND FOLIENHERSTELLUNGSSYSTEM**
FILM PRODUCTION METHOD AND SYSTEM
MÉTHODE ET SYSTÈME DE FABRICATION DE FILM

(43) Veröffentlichungstag der Anmeldung: 12.12.2018
(73) Patentinhaber: Adler Pelzer Holding GmbH, 58099 Hagen (DE)
(72) Erfinder: NICOLAI, Norbert, 46514 Schermbeck-Gahlen (DE); WUTZLER, André, 06217 Merseburg (DE); SCHULZE, Volkmar, 84069 Schierling (DE); BLOMBERG, Hannes, 58454 Witten (DE); TOCCHI, Gabriele, 20900 Monza (MB) (IT)
(74) Vertreter: Bittner, Bernhard
(86) Internationale Anmeldenummer: PCT/DE2016/100050
(87) Internationale Veröffentlichungsnummer: WO 2017/133716

(56) Entgegenhaltungen:
- EP-A1- 0 839 855
- DE-A1- 2 438 486
- FR-A- 1 167 760
- US-A1- 2001 028 945
- US-B1- 6 372 164
- US-B1- 6 391 381

## Beschreibung

Die Erfindung betrifft ein Folienherstellungsverfahren einer wenigstens zweifarbig-dessinierten thermisch verformbaren Kunststofffolie.

Ferner betrifft die Erfindung eine Folienherstellungsanordnung einer wenigstens zweifarbig-dessinierten thermisch verformbaren.

In Nutzfahrzeugen sind in den Fahrerkabinen die Bodenbeläge nahezu 100 % nicht textiler Natur. Für die schweren Lastkraftwagen sind diese bis auf wenige Ausnahmen aus Gummi. Für kleine oder mittlere Transporter und Nutzfahrzeuge sind es nicht vernetzte Kunststoffbeläge mit Deckschichten aus PVC und zunehmend aus TPO. Die Beläge bestehen im Wesentlichen aus einer Grundfarbe und sind meistens mit einem definierten Design bedruckt und besitzen eine weitere Schutzschicht.

Aufgrund der Belastung im täglichen Gebrauch wird als erstes die Schutzschicht zerstört und zunehmend das Druckbild abgerieben. Bei einer Laufleistung ab ca. 30 000 km, in Abhängigkeit vom Verschmutzungsgrad und Schuhwerk, ist in der Regel im Bereich der Fußaufstellfläche keine gedruckte Dekoroberfläche mehr vorhanden.

Aus dem Stand der Technik sind unterschiedliche Bodenbeläge sowie Bodenbelagsherstellungsverfahren bekannt, mittels denen insbesondere Strukturen geschaffen werden können, die über die Dicke der Deckschicht oder des Bodenbelages partiell oder vollständig durchgefärbt sind.

Das Patent US 6 372 164 B1 betrifft ein Verfahren und eine Vorrichtung zur Erzeugung von visuellen und anderen Oberflächeneffekten, in einer thermoplastischen Platte durch direktes Auftragen eines farbhaltigen thermoplastischen Harzsystems, auf mindestens eine Oberfläche eines extrudierten thermoplastischen Substrats.

In der Druckschrift DE 35 46 151 C2 ist ein Verfahren zur Herstellung dessinierter homogener Flächengebilde unterschiedlicher Farbe aus einer Mischung von thermoplastischen Kunststoffen, bevorzugt PVC, beschrieben. Hierbei werden körnige Materialien bis zu einer maximalen Korngröße von 2,5 mm flächig aufgeschüttet, unter Wärmeeinwirkung plastifiziert, bis sich eine poröse zusammenhängende Schicht bildet. Gegebenenfalls wird nach dem Abkühlen ein flüssiges oder rieselfähiges aufschmelzbares farbiges Medium in vorbestimmten Mustern aufgetragen, das in die poröse Schicht bis zur gewünschten Tiefe eindringt. Unter Druck und Wärme wird die eingefärbte poröse Schicht zu einem kompakten Flächengebilde verdichtet.

Weiter wird in der Druckschrift DE 44 45 429 C1 auf eine erwärmte Kunststofffolie vor einem ersten Kalander scharfkantiges PVC Granulat gestreut und in den Walzen festgedrückt. Nach einem weiteren Erwärmen der Folie wird in einem weiteren Kalander mit einer Prägewalze eine Flächenstruktur auf der Folie erzeugt und die Kontur des Granulats entschärft. In einer anschließenden Bandpresse mit beheizter Trommel erfolgt das endgültige Verpressen und Verschweißen des Granulats mit der Folie. Es entsteht ein Bodenbelag mit scharfkantiger richtungsfreier Marmorierung.

In der Druckschrift DE 195 27 553 C1 wird ein Verfahren beschrieben, bei dem homogene elastische Bodenbelags-Kunststoffbahnen oder -platten mit nicht gerichteter Farbmusterung hergestellt werden können. Ein mehrfarbiges Stäbchen Granulat wird zu einer Platte oder Bahn kompaktiert. Die Granulatstäbchen weisen Farbbereiche auf, in denen 2 oder mehr Farben im Wesentlichen nicht miteinander vermischt sind. Die Farbbereiche verlaufen hauptsächlich parallel der Längsachse der Stäbchen. Bei einer Verarbeitung in einer Walze oder einem Kalander kann in einem Arbeitsgang eine Farbmusterung ohne Vorzugsrichtung erzeugt werden.

Aus den Druckschriften DE 37 43 297 A1 und DE 37 43 296 A1 ist ein Verfahren zur Herstellung von mehrfarbig strukturierten, homogenen Kunststoffbahnen oder -platten bekannt, wobei mehrfarbige Granulate miteinander verarbeitet und zu Bahnen geformt werden. Das Granulat besteht aus einem EVA Binder, sowie bis zu 80 Gew.-% Füllstoff und 5 Gew.-% Farbpigmente.

In der Druckschrift DE 44 05 589 C1 wird ein Verfahren für vernetzbare Kunststoffe oder Gummi beschrieben, bei dem einfarbige Materialstränge oder Stränge mit längs verteilten Farben zu Scheibengranulat geschnitten werden und dieses Granulat auf eine Materialbahn mit einer anderen Farbe vor einem ersten Kalanderwalzenpaar aufgegeben wird. In einer möglichen weiteren Stufe kann eine weitere Farbe als Granulat aufgegeben und über einen nachfolgenden Kalander in das Material eingearbeitet werden. Dabei kann das Scheibengranulat nur oberflächig von einer oder beiden Seiten eingebracht werden. In einem letzten Schritt wird die Materialbahn vernetzt.

Weiter wird in der Druckschrift DE 36 88 134 T2 ein Bandmaterial vom Inlaytyp in der Art hergestellt, dass in ein ungeliertes PVC-Plastisol farbige Harzteilchen aufgetragen werden, diese kontinuierlich mit steigenden Druck in die Bahn eingedrückt werden und das Plastisol zeitgleich ausgeliert wird, wobei eine durchgefärbte Kunststoffbahn entsteht.

In der Druckschrift DE 25 52 653 C3 wird ein Verfahren zur Herstellung von Harzschichten mit geometrischen, dekorativen Mustern beschrieben, bei dem Harzpartikel mit unterschiedlicher Färbung mittels Schablonen nacheinander auf einen Träger abgelegt und anschließend durch Wärmezufuhr zusammengesintert. Weiter ist aus der Druckschrift GB 1,087,560 A eine Vorrichtung bzw. ein Verfahren bekannt, die zwei perforierte drehende Zylindern aufweist, die mit Pulver versorgt werden. Immer dann, wenn sich die Perforationen treffen wird Pulver auf den darunter vorbei 35 geführten Träger aufgebracht. Besonders vorteilhaft ist es dabei, dass das Pulver infolge der Wärmebehandlung teilweise in die Unterlage eindringt und damit eine hohe Stabilität erreicht wird.

In der Druckschrift FR 1.167.760 A wird ein Verfahren beschrieben, bei dem zwei farblich unterschiedliche Fraktionen eines Materials, bevorzugt PVC, über einen Kalander zu einer Bahn komprimiert und in ein thermoplastisches Grundmaterial eingedrückt werden. Diese Struktur wird zumindest bis zur Schmelztemperatur des Grundmaterials erwärmt und verpresst, wobei die Granulate vollständig umschlossen werden.

US 6,391,381 B1 betrifft ein Verfahren zur Herstellung einer Abdeckung umfassend die Schritte des Bildens einer laminaren Basisschicht (W), des Verteilens von dekorativen Partikeln (P2) auf der Basisschicht (W) und des Fixierens der dekorativen Partikel (P2) an der Basisschicht (W). Die Basisschicht (W) wird aus einer Mischung mit einer homogen dispergierten Phase weiterer Partikel (P1) gebildet. Die dekorativen Partikel (P2) sind in einer spärlichen Anordnung auf der Basisschicht (W) verteilt, wodurch eine Überlappung der Partikel im Wesentlichen verhindert wird. Die Gleichmäßigkeit des Aussehens der Hülle wird dennoch durch die weiteren Partikel (P1) gewährleistet, die homogen in der Mischung dispergiert sind.

Im Allgemeinen können die im Stand der Technik beschriebenen Aufbauten durch einen Mehrlagenaufbau beschrieben werden, wobei auf einen Träger eine Kunststoffschicht, meistens PVC-Folie, aufgetragen wird, die dann im Anschluss mit einem Dekor oberflächig versehen wird. Zum Schutz wird oftmals eine weitere transparente Schicht auf die Oberfläche aufgebracht. Alle diese Techniken sind jedoch im weitesten Sinn Drucktechniken, wobei hierbei viskose Materialien zum Einsatz kommen.

Die Probleme im Stand der Technik sind im Wesentlichen, dass es derzeit nicht möglich ist einen kostengünstigen Bodenbelag mit einer entsprechenden Deckschicht herzustellen, der folgende Anforderungen erfüllt:
- Deckschicht und/oder Bodenbelag muss thermisch verformbar sein
- Deckschicht und/oder Belag haben ein definiertes, vorgegebenes, mindestens zweifarbiges Design sowie
- Deckschicht und/oder Bodenbelag ist wenigstens zu einem Teil, insbesondere mindestens zu 30 %, durchgefärbt, um eine oberflächliche Abnutzung des Designs zu verhindern.

Es wurde insbesondere erkannt, dass bei im Stand der Technik befindlichen Kunststofffolien allesamt nicht alle diese Anforderungen erfüllt werden können.

Der vorliegenden Erfindung liegt die Aufgabe zugrunde, ein günstiges und effizient arbeitendes Folienherstellungsverfahren sowie eine Folienherstellungsanordnung aufzuzeigen, wobei ein vorgegebenes Design realisiert wird und dieses Design wenigstens teilweise oder auch über die gesamte Belagdicke reicht, so dass durch Abrieb an der Oberfläche des Bodenbelages das Erscheinungsbild des Belages nicht geändert wird.

Gelöst wird diese Aufgabe mit einem Folienherstellungsverfahren gemäß Hauptanspruch und einem Folienherstellungssystem gemäß nebengeordnetem Anspruch.

Das hier offenbarte Folienherstellungsverfahren für die Herstellung einer wenigstens zweifarbig-dessinierten thermisch verformbaren Kunststofffolie umfasst wenigstens die nachfolgenden Schritte:
Extrudieren eines ersten Kunststoffes zu einer schmelzflüssigen Kunststoffschmelze und flächiges Ausbringen der Kunststoffschmelze aus dem ersten Kunststoff in einer ersten Dicke mittels einer Extruderdüse/Breitschlitzdüse;
definiertes flächiges Aufbringen eines zweiten streu- und/oder rieselfähigen Kunststoffes in einem definierten Musterdesign mittels Muster-Schablone auf die aus dem ersten Kunststoff bestehende Kunststoffschmelze, und
Kalandrieren / Kalibrieren der Kunststoffschmelze und gleichzeitiges wenigstens teilweises Eindrücken des im Musterdesign flächig aufgebrachten zweiten Kunststoffes in den ersten Kunststoff mittels einer Kalanderanordnung Abkühlen der Schmelze zu einer festen Kunststofffolie, wobei
zum Aufbringen des zweiten Kunststoffes 8 der zweite Kunststoff 8 als Granulat, Pulver, Gries oder Partikelgemisch vorliegt, wobei die Partikelgröße des zweiten Kunststoffs 8 im Mittel der Enddicke der Kunststofffolie 1 entspricht,
   oder
bis maximal 50 % größer und/oder minimal 70 % kleiner als die Enddicke der Kunststofffolie 1 ist.

Als mögliche Kunststoffe kommen thermoplastische Elastomere auf Olefinbasis, TPO, TPE-O, thermoplastische Elastomere auf Urethanbasis, TPU, TPE-U, PVC besonders bevorzugt zur Anwendung sowie alle flexiblen thermoplastischen Kunststoffe wie, Polyethylen, Polypropylen, Polyvinylchlorid, Polyurethan in reiner Form als auch als Bestandteil von Copolymeren als auch in Mischungen und ungefüllt als auch mit anorganischen Füllstoff versehen zur Anwendung.

Der zweite Kunststoff kann ein andersfarbiger erster Kunststoff sein, der in einer bevorzugten Ausführungsform sich lediglich in der Farbe von dem ersten Kunststoff unterscheidet, also ein anders eingefärbter erster Kunststoff sein könnte.

Weiter kann auch als zweiter Kunststoff eingesetzt werden ein mit dem ersten Kunststoff verträgliches Material mit ähnlichen Eigenschaften im kalten und erwärmten Zustand. Verträglich in diesem Sinne bedeutet die Polymere sind im molekularen Zustand mischbar.

Es wird diesbezüglich auf D.R. Paul, S. Newman, Polymer Blends, Vol.1 & 2, Academic Press Inc., London 1978 und M.J. Folkes, P.S. Hope, Polymer Blends and Alloys, Blackie Academic & Professional, London, Glasgow, New York 1993 sowie Manfred Rätzsch, Wechselwirkung zwischen Polymeren, in "Polymerreaktionen und reaktives Aufbereiten in kontinuierlichen Maschinen", S.41 - 66, VDI Verlag Düsseldorf 1988 hingewiesen.

Eine mögliche Kombination ist ein PP basiertes TPO als erster Werkstoff mit einen Homo oder CoPP als zweiter Werkstoff. Gleiches gilt dann auch für die anderen Grundpolymere wie PE, PU und PA.

In der nachfolgenden Tabelle sind die Verträglichkeiten unterschiedlicher Kunststoffe miteinander dargestellt:

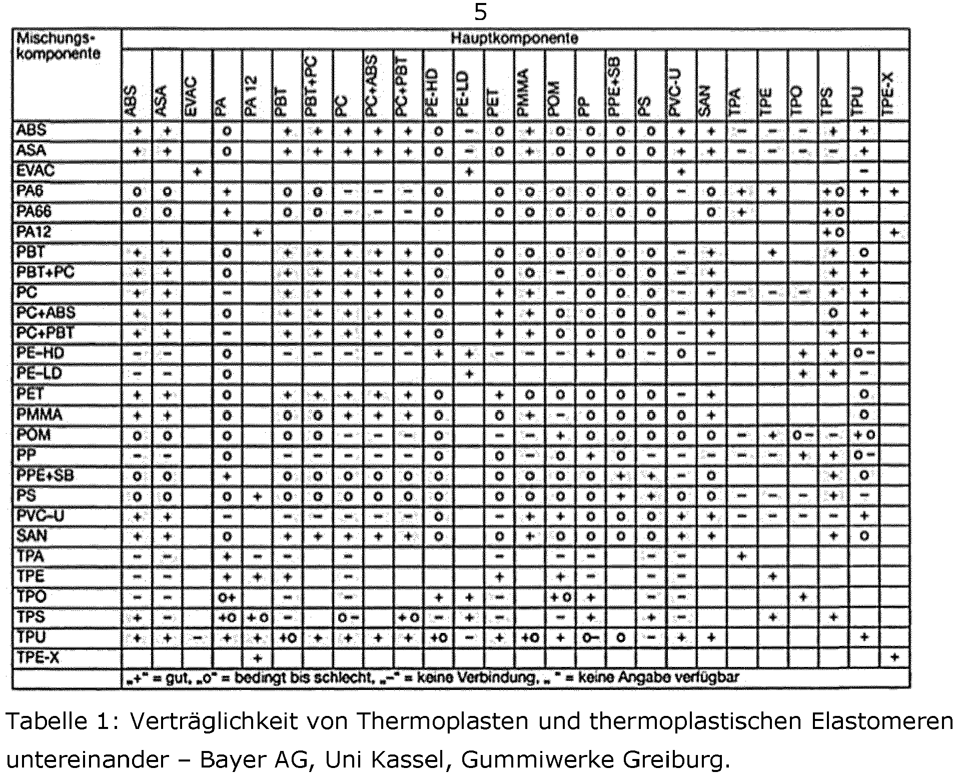

Das Aufbringen des zweiten Kunststoffes auf die aus dem ersten Kunststoff bestehende flächige Kunststoffschmelze kann durch Aufstreuen erfolgen. Hierbei bieten sich entsprechende Aufstreuvorrichtungen an, beispielsweise Streueinrichtungen mit Schablonen jeder Art und insbesondere Rundschablonen in Form eines Rotations-Schablonenstreuers, wie diese beispielsweise vom Hersteller Sandvik bekannt sind. Selbstverständlich sind auch andere Aufbringverfahren mit Schablone denkbar, wobei diese Aufbringverfahren lediglich mit dem Vortrieb der Kunststoffschmelze während des Verfahrens parallel geschaltet werden müssen.

Zum Aufbringen des zweiten Kunststoffes liegt der zweite Kunststoff als Granulat, Pulver, Gries oder Partikelgemisch vor, wobei die Partikelgröße des zweiten Kunststoffs bevorzugt der Enddicke der Kunststofffolie entsprecht oder bis zu maximal 50 % größer und/oder minimal 70 % kleiner als die Enddicke der Kunststofffolie ist. Durch diese Partikelgrößen lassen sich die besten optischen Ergebnisse der späteren zweifarbig dessinierten Kunststofffolie erreichen. Es ist aber auch bereits mit kleineren Partikeln möglich eine zweifarbig dessinierte Kunststofffolie zu erzielen, wobei dann die Partikel von einer Seite entsprechend ihrer Größe nur teilweise in die schmelzflüssige Kunststoffschmelze aus dem ersten Kunststoff eingedrungen sind und somit wenigstens eine Eindringtiefe von ca. 30 % der späteren Kunststofffoliendicke gegeben sein sollte. Daher wird empfohlen, die Partikelgröße wenigstens auf 30 % der späteren Kunststofffoliendicke als untere Grenze zu beschränken, da so die Kunststofffolie bei der späteren Verwendung abgenutzt werden kann, ohne dass das Design gleich verschwunden ist, beispielsweise beim Einsatz der Kunststofffolie als Fußbodenbelag.

Das Folienherstellungssystem weist für die Herstellung einer wenigstens zweifarbig-dessinierten thermisch verformbaren Kunststofffolie, insbesondere mit einem hier offenbarten Folienherstellungsverfahren auf:
- einen Extruder mit einer Breitschlitzdüse zur Herstellung und Ausbringung einer flächigen schmelzflüssigen Kunststoffschmelze aus einem ersten Kunststoff;
- eine Aufbring- und/oder Aufstreuvorrichtung zum Aufbringen/Aufstreuen eines zweiten Kunststoffes auf die aus dem ersten Kunststoff bestehende Kunststoffschmelze;
- eine Kalanderanordnung zur Kalibrierung der Dicke der Folie und gleichzeitiges wenigstens teilweises Eindrücken des zweiten Kunststoffes in die aus dem ersten Kunststoff bestehende Kunststoffschmelze, wobei- die Aufbring
- und/oder Aufstreuvorrichtung vor der Kalanderanordnung angeordnet ist und- die Ausrichtung der Kunststoffschmelze im Bereich der Aufbring
- und/oder Aufstreuvorrichtung waagerecht ist, wobei- nach der Extruderdüse eine Transportbandanordnung vorgesehen ist, wobei die Extrusion auf die Transportbandanordnung erfolgt,
und einen ersten Kunststoff und einen zweiten Kunststoff, der als Granulat, Pulver, Gries oder Partikelgemisch vorliegt, wobei die Partikelgröße des zweiten Kunststoffs im Mittel - der Enddicke der Kunststofffolie entspricht, oder - bis maximal 50 % größer und/oder minimal 70 % kleiner als die Enddicke der Kunststofffolie ist.

Hierdurch ist es möglich, während des Herstellungsprozesses ein zweifarbiges Design innerhalb einer herzustellenden Kunststofffolie zu realisieren, wobei das Design wenigstens teilweise in der Dicke der Kunststofffolie vorliegt. Es ist gerade erfinderisch den zweiten Kunststoff, der beispielsweise in Pulver, Gries, Granulat oder Partikelform vorliegt, vor dem Aushärten und Kalandrieren auf den ersten Kunststoff aufzutragen bzw. aufzustreuen, so dass dieser während des Kalandrierens in den ersten Kunststoff eingedrückt werden kann und zusammen mit dem ersten Kunststoff verschmilzt, so dass eine Kunststofffolie entsteht.

Insbesondere kann die Kunststofffolie auch stofflich homogen ausgebildet sein. Die Aufbring- und/oder Aufstreuvorrichtung ist eine Streueinrichtung mit Schablone oder Rundschablone bevorzugt mit einer Einfach- oder Doppelrakelanordnung ausgebildet sein.

Die Kalanderanordnung und die Aufbring- und/oder Aufstreuvorrichtung können in einer bevorzugten Ausführungsform kombiniert sein, wobei oberhalb einer ersten Kalanderwalze die Aufbring- und/oder Aufstreuvorrichtung angeordnet ist und eine zweite sowie dritte Kalanderwalze vorgesehen sind, um eine Dickenkalibrierung und Kühlung vorzunehmen.

Hierbei ist es besonders vorteilhaft, wen die erste Kalanderwalze einen größeren Durchmesser aufweist, so dass ausreichend Platz für die Aufbring- und/oder Aufstreuvorrichtung geschaffen wird.

Die offenbarte wenigstens zweifarbig-dessinierte thermisch verformbare Kunststofffolie weist, insbesondere hergestellt mit einem hier offenbarten Folienherstellungsverfahren und/oder einer Folienherstellungsanordnung einen ersten Kunststoff mit einer ersten Farbei und wenigstens einen zweiten Kunststoff mit einer von der ersten Farbe verschiedenenzweiten Farbe auf, wobei die Kunststoffe miteinander verschmolzen sind, der zweite Kunststoff wenigstens teileweise, jedoch mehr als 30 % der Foliendicke in Dickenerstreckung in der Folie eingebunden ist und wenigstens eine Oberflächenseite der Folie ein definiertes Design/Muster aufweist, das durch die zweifarbige Ausgestaltung gebildet ist.

Hierzu können der erste und der zweite Kunststoff aus dem gleichen Material sein und unterschiedliche Farben aufweisen, wobei der erste und der zweite Kunststoff ausgewählt sein kann aus den Materialien:
- thermoplastische Elastomere auf Olefinbasis, TPO, TPE-O,
- thermoplastische Elastomere auf Urethanbasis, TPU, TPE-U, PVC
- alle flexiblen thermoplastischen Kunststoffe wie, Polyethylen, Polypropylen, Polyvinylchlorid, Polyurethan in reiner Form als auch als Bestandteil von Copolymeren als auch in Mischungen und ungefüllt als auch mit anorganischem Füllstoff versehen.

Nachfolgend werden Ausführungsbeispiele der Erfindung anhand der beiliegenden Zeichnungen in der Figurenbeschreibung detailliert beschrieben, wobei diese die Erfindung erläutern sollen und nicht beschränkend zu werten sind:
Es zeigen:
- Fig. 1: ein schematisches Ausführungsbeispiel der offenbarten Kunststofffolien-Herstellungsanordnung;
- Fig. 2: eine Detailseitenansicht der Aufstreuvorrichtung innerhalb der offenbarten Kunststofffolienherstellungsanordnung gemäß Fig. 1;
- Fig. 3: ein schematisches zweites Ausführungsbeispiel der offenbarten Kunststofffolienherstellungsanordnung und
- Fig. 4: ein Schliffbild einer nach dem offenbarten Verfahren hergestellten dessinierten Kunststofffolie

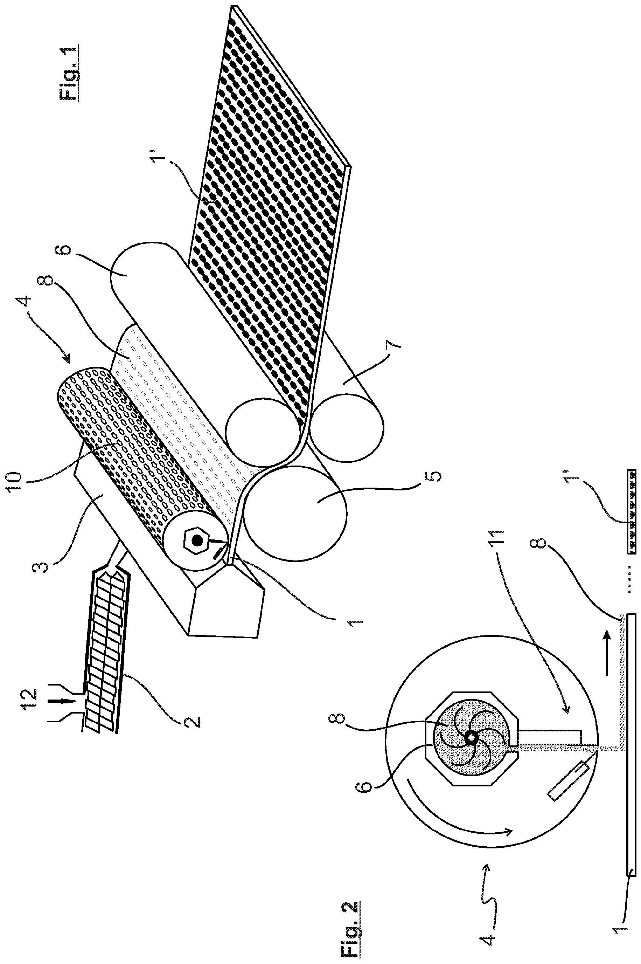

In **Fig. 1** ist ein schematisches Ausführungsbeispiel der offenbarten Kunststofffolien-Herstellungsanordnung dargestellt.

Die Kunststofffolienherstellungsanordnung weist einen Extruder 2 auf, an dessen Ausgang eine Extruderdüse 3 angeordnet ist, mittels derer ein Extrudieren eines ersten Kunststoffes zu einer flächigen schmelzflüssigen Kunststoffschmelze 1 möglich ist.

Weiter weist die Kunststofffolienherstellungsanordnung eine Kalanderanordnung 5, 6, 7 auf, die der Dickenkalibrierung der Kunststoffschmelze 1 bzw. Kunststofffolie 1 dient. Die Kalanderanordnung weist in diesem bevorzugten Ausführungsbeispiel drei Kalanderwalzen auf, nämlich eine erste 5, eine zweite 6 und eine dritte Kalanderwalze 7. Die zweite 5 und dritte Kalanderwalze 7 sind hierbei übereinander angeordnet und bilden zusammen eine zweite Kalibrierungsstufe. Die erste 5 und zweite Kalanderwalze 6 sind horizontal versetzt angeordnet und bilden zusammen eine erste Kalibrierungsstufe.

Weiterhin besonders ist in diesem Ausführungsbeispiel, dass die erste Kalanderwalze 5 einen deutlich größeren Durchmesser aufweist, als die nachfolgend angeordneten weiteren Kalanderwalzen 6 und 7, so dass auf der oberen Seite der ersten Kalanderwalze 5 eine Aufbring- und / oder Aufstreuvorrichtung 4 angeordnet werden kann und somit ausreichend Raum für einen zusätzlichen Verfahrensschritt, nämlich das Aufstreuen geschaffen wird.

In dem Extruder 2 wird der erste Kunststoff 12 geschmolzen und aus der Extruderdüse 3 extrudiert und der nachfolgend angeordneten Kalanderanordnung 5, 6, 7 zugeführt. Die Kalanderanordnung 5, 6, 7 ist dabei derart ausgestaltet, dass die Kunststoffschmelze 1 waagerecht auf die erste Kalanderwalze 5 des Kalanders abgelegt werden kann.

Als Teil der Aufbring- und / oder Aufstreuvorrichtung 4 ist eine Streueinrichtung 4 mit Rundschablone 10 vorgesehen, wobei in diesem Ausführungsbeispiel ein Rotations-Schablonenstreuer 4 verwendet wird. Mittels dieser Streueinrichtung 4 mit Rundschablone wird ein zweiter Kunststoff 8 auf die schmelzflüssige Kunststoffschmelze 1 mit definiertem Design aufgebracht. Der zweite Kunststoff 8 entspricht in bevorzugter Weise dem ersten Kunststoff 12 und weist jedoch eine andere Farbe auf, so dass ein zweifarbiges Design entsteht.

Der zweite Kunststoff 8 kann als Granulat, Pulver, Gries oder Partikelgemisch vorliegen, so dass er streu- oder rieselfähig ist. Hierdurch kann ein Muster auf dem ersten Kunststoff 12 aufgetragen werden, wodurch letztendlich ein wenigstens zweifarbiges Design entsteht. Der zweite Kunststoff 8 in Form eines Streumaterials hat bevorzugt Partikelgrößen im Bereich der späteren Foliendicke. Bestimmte Designs, bei dem die Einfärbung größer als die Partikelgröße ist, müssen aus mehreren Partikeln hergestellt werden, wobei dies durch die entsprechende Schablone realisiert wird. Kleinere Partikel bedingen ein nur oberflächiges Eindringen in die schmelzflüssige Kunststoffschmelze 1, wodurch sich jedoch nur eine teilweise und keine vollständige Durchfärbung der hergestellten desinnierten Kunststofffolie 1' ergibt. Hingegen werden zu große Partikel des zweiten Kunststoffes 8 während eines nachfolgend durchzuführenden Kalibrierschrittes deformiert und könnten das Design nachteilig verändern.

An dieser Stelle sei darauf hingewiesen, dass es auch möglich ist drei- oder vierfarbige als auch multicolorale Designs durch Aufbringen eines zusätzlichen dritten oder weiterer Kunststoffe zu erzielen, wobei die Aufstreuvorgänge mittels einer oder aber auch hintereinander angeordneter Aufbring- und / oder Aufstreuvorrichtungen 4 erfolgen können.

Zur Ausgestaltung der Aufbring- und / oder Aufstreuvorrichtung 4 kann ferner ein geschlossenes Zuführrohr 9 mit integrierter Förderschnecke vorgesehen sein, wobei der zweite Kunststoff 8 axial in die Rundschablone 10 transportiert wird. An dem Zufuhrrohr 9 befinden sich an der unteren Seite einstellbare Auslassöffnungen für den zweiten Kunststoff 8, so dass hierdurch ein definierter, gleichmäßiger und kontinuierlicher Materialfluss an eine unterseitig montierte Doppelrakelanordnung 11 gewährleistet werden kann. Die Doppelrakelanordnung 11 streicht den zweiten Kunststoff 8 von innen durch die Öffnungen der Schablone 10 und wird präzise entsprechend dem Schablonenmuster auf die darunter durchlaufende Kunststoffschmelze 1 aufgetragen.

Nachdem der zweite Kunststoff 8 auf die Kunststoffschmelze 1 aus dem ersten Kunststoff 12 aufgetragen wurde, erfolgt eine Dickenkalibrierung über die Kalanderanordnung 5, 6, 7 mit den zwei weiteren Walzen 6 und 7, so dass eine definierte Kunststofffolie 1 entsteht. In diesen Walzen 5; 6; 7 wird der in Pulverform aufgestreute zweite Kunststoff 8 in die Kunststoffschmelze 1 quasi gedrückt und verschmelzt mit dieser 1, wobei hierbei eine feste Bindung zwischen den ersten 12 und zweiten Kunststoff 8 hergestellt wird. Die mit andersfarbigen pulverisierten Streumaterial 8 versehene Kunststoffschmelze 1 wird auf die gewünschte Dicke kalandriert, wobei Partikel des pulverisierten Streumaterials 8 mit Abmessungen größer als die Foliendicke auf die Foliendicke verpresst und in Abhängigkeit von ihrer Größe nicht oder geringfügig gelängt werden. Abschließend wird die dessinierte 30 Kunststoffschmelze 1 gekühlt und als dessinierte Kunststofffolie 1' abgezogen.

In **Fig. 2** ist eine Detailseitenansicht der Aufstreuvorrichtung innerhalb der offenbarten Kunststofffolienherstellungsanordnung gemäß Fig. 1 dargestellt.

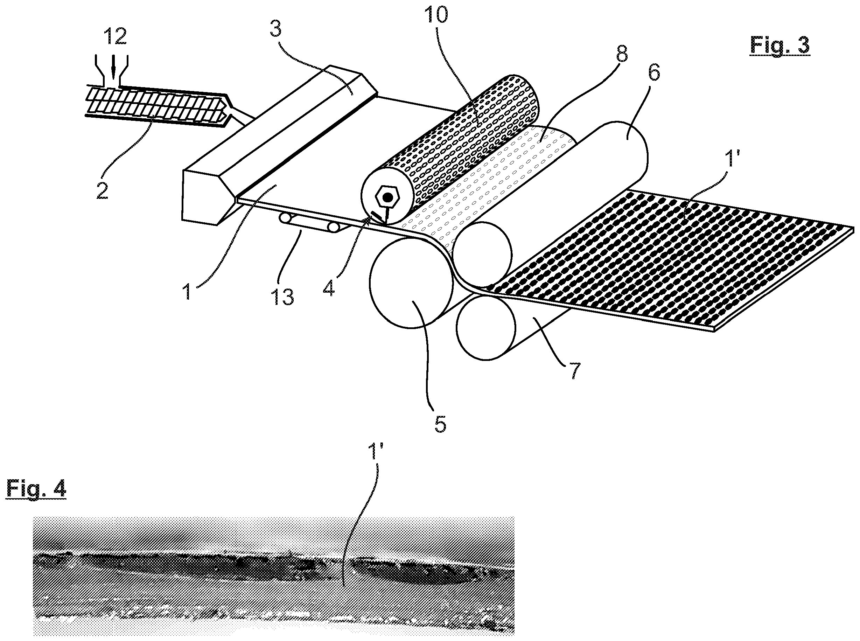

**Fig. 3** zeigt ein schematisches zweites Ausführungsbeispiel der offenbarten Kunststofffolienherstellungsanordnung.

In dieser Ausführungsvariante ist ein zwischen der als Breitschlitzdüse ausgebildeten Extruderdüse 3 eine Transportbandanordnung 13 angeordnet, auf die zunächst die Folie nach dem Extrudieren abgelegt wird und anschließend der Streueinrichtung 4 zugeführt wird.

**Fig. 4** zeigt ein Schliffbild einer nach dem offenbarten Verfahren hergestellten dessinierten Kunststofffolie 1'.

Die hergestellte Kunststofffolie 1 besteht aus einem ersten Kunststoff 12 und einem über ein definiertes Musterdesign aufgebrachten zweiten Kunststoff 8, die miteinander verschmolzen sind und so die zweifarbige dessinierte Kunststofffolie 1' bilden. Deutlich ist zu erkennen, dass als Endprodukt eine dessinierte Folie hergestellt worden ist, die bis in die Tiefe Durchfärbungen aufweist, so dass diese hergestellte Folie sehr Widerstandsbeständig gegen Abrieb ist, da das Design nicht nur oberflächlich aufgebracht wurde.

Nachfolgend erfolgt die Beschreibung der Erfindung ergänzend aber nicht beschränkend anhand eines konkreten Ausführungsbeispiels unter Hinzunahme der zuvor erläuterten zwei Figuren:
Als Grundmaterial wird ein LLDPE basiertes TPO verwendet. Das Material ist hierbei hellgrau eingefärbt und bildet den ersten Kunststoff 12. Das gleiche Material schwarz eingefärbt, wird zu Pulver vermahlen und bildet so den zweiten Kunststoff 8. Es wird eine Siebfraktion mit einem mittleren Durchmesser von 0,8 mm verwendet.

Es werden 25 % der Gesamtmasse der fertigen Kunststofffolie 1 als Pulver in Form des zweiten Kunststoffes 8 aufgestreut. Als Design wurden Ovale mit den Abmessungen in den Hauptrichtungen von 3 mm x 6 mm gewählt. Der Kalanderspalt ist mit einem Wert von 0,45 mm eingestellt. Die Abzugsgeschwindigkeit der Folie beträgt 4 m / min.

Das Pulver, also der zweite Kunststoff 8, wird nicht vollständig in das Grundmaterial, also den ersten Kunststoff 12, eingedrückt, wodurch im Gegensatz zur nicht bestreuten Oberfläche eine Rauhigkeit entsteht, die zu einer deutlichen Reduzierung des Rutschverhaltens führt und letztendlich bei Verwendung beispielsweise als Bodenbeleg für ein Fahrzeug erhebliche und auf der Hand liegende Vorteile mit sich bringt.

Im Weiteren wurde das Material zu einem Bodenbelag für ein Fahrzeug verarbeitet, wobei in Untersuchungen zum Abrieb festgestellt werden konnte, dass nach 1000 Umdrehungen im Tabertest die Oberfläche genau noch so aussieht wie am Anfang, während die bedruckten Muster schon nach 500 Umdrehungen die Farbe verloren haben.

### Bezugszeichenliste:

- 1: Kunstofffolie/Kunststoffschmelze
- 1': dessinierte Kunststofffolie
- 2: Extruder
- 3: Extruderdüse
- 4: Streueinrichtung
- 5: erste Kalanderwalze
- 6: zweite Kalanderwalze
- 7: dritte Kalanderwalze
- 8: zweiter Kunststoff
- 9: Zuführrohr/Zuführung
- 10: Rundschablone
- 11: Rakel/Doppelrakel
- 12: erster Kunststoff
- 13: Transportbandanordnung

## Patentansprüche

1. Folienherstellungsverfahren einer wenigstens zweifarbig-dessinierten thermisch verformbaren Kunststofffolie (1) umfassend die Schritte:
- Extrudieren eines ersten Kunststoffes (12) zu einer schmelzflüssigen Kunststoffschmelze (1) und flächiges Ausbringen der Kunststoffschmelze (1) aus dem ersten Kunststoff (12) in einer ersten Dicke mittels einer Extruderdüse (3) /Breitschlitzdüse;
- definiertes flächiges Aufbringen eines zweiten streu- und/oder rieselfähigen Kunststoffes (8) in einem definierten Musterdesign mit einer Muster-Schablone (4) auf die aus dem ersten Kunststoff (12) bestehende Kunststoffschmelze (1),
und
- Kalandrieren/Kalabrieren der Dicke der Kunststoffschmelze (1) und gleichzeitiges wenigstens teilweises Eindrücken des im Musterdesign flächig aufgebrachten zweiten Kunststoffes (8) in den ersten Kunststoff (12) mittels einer Kalanderanordnung (5,6,7),
- Abkühlen der Schmelze zu einer festen Kunststofffolie, wobei zum Aufbringen des zweiten Kunststoffes (8) der zweite Kunststoff (8) als Granulat, Pulver, Gries oder Partikelgemisch vorliegt, wobei die Partikelgröße des zweiten Kunststoffs (8) im Mittel
- der Enddicke der Kunststofffolie (1) entspricht,
oder
- bis maximal 50 % größer und/oder minimal 70 % kleiner als die Enddicke der Kunststofffolie (1) ist.

2. Folienherstellungsverfahren nach Anspruch 1, **dadurch gekennzeichnet, dass** als zweiter Kunststoff (8) ein andersfarbiger erster Kunststoff (12) verwendet wird.

3. Folienherstellungsverfahren nach Anspruch 1 oder 2, **dadurch gekennzeichnet, dass** das Aufbringen des zweiten Kunststoffes (8) auf die aus dem ersten Kunststoff (12) bestehende Kunststoffschmelze (1) durch Aufstreuen erfolgt.

4. Folienherstellungssystem zur Herstellung wenigstens zweifarbig-dessinierten thermisch verformbaren Kunststofffolie (1) umfassend
(a) eine Folienherstellungsanordnung einer wenigstens zweifarbig-dessinierten thermisch verformbaren Kunststofffolie (1), insbesondere mit einem Folienherstellungsverfahren nach einem der vorangehenden Ansprüche aufweisend:
- einen Extruder (2) mit einer Breitschlitzdüse (3) zur Herstellung und Ausbringung einer flächigen schmelzflüssigen Kunststoffschmelze (1) aus einem ersten Kunststoff (12);
- eine Aufbring- und/oder Aufstreuvorrichtung (4) zum Aufbringen/Aufstreuen eines zweiten Kunststoffes (8) auf die aus dem ersten Kunststoff (12) bestehende Kunststoffschmelze (1);
- eine Kalanderanordnung (5,6,7) zur Kalibrierung der Dicke der Folie und gleichzeitiges wenigstens teilweises Eindrücken des zweiten Kunststoffes (8) in die aus dem ersten Kunststoff (12) bestehende Kunststoffschmelze (1),
wobei
- die Aufbring- und/oder Aufstreuvorrichtung (4) vor der Kalanderanordnung (5, 6, 7) angeordnet ist
und
- die Ausrichtung der Kunststoffschmelze (1) im Bereich der Aufbring- und/oder Aufstreuvorrichtung (4) waagerecht ist, wobei
- nach der Extruderdüse eine Transportbandanordnung vorgesehen ist, wobei die Extrusion auf die Transportbandanordnung erfolgt, und
(b) einen ersten Kunststoff (12) und einen zweiten Kunststoff (8), der als Granulat, Pulver, Gries oder Partikelgemisch vorliegt, wobei die Partikelgröße des zweiten Kunststoffs (8) im Mittel - der Enddicke der Kunststofffolie (1) entspricht, oder - bis maximal 50 % größer und/oder minimal 70 % kleiner als die Enddicke der Kunststofffolie (1) ist.

5. Folienherstellungssystem nach dem vorangehenden Anspruch, **dadurch gekennzeichnet, dass** die Aufbring- und/oder Aufstreuvorrichtung
- eine Streueinrichtung (4) mit Rundschablone (10)
und/oder
- eine Einfach- oder Doppelrakelanordnung
aufweist.

6. Folienherstellungssystem nach einem der beiden vorangehenden Ansprüche, **dadurch gekennzeichnet, dass** die Kalanderanordnung (5, 6, 7) und die Aufbring- und/oder Aufstreuvorrichtung (4) kombiniert sind, wobei oberhalb einer ersten Kalanderwalze (5) die Aufbring- und/oder Aufstreuvorrichtung (4) angeordnet ist und eine zweite (6) sowie dritte Kalanderwalze (7) vorgesehen sind, um eine Dickenkalibrierung vorzunehmen, wobei die zweite (6) und dritte Kalanderwalze (7) übereinander angeordnet sind.

## Claims

1. Film production process of at least one two-colored patterned thermally deformable plastic film (1) comprising the steps:
- Extruding one first plastic material (12) into a flowable plastic melt (1) and two-dimensional dispensing of the plastic melt (1) from the first plastic material (12) in a first thickness using an extruder die (3) / slot die;
- application in a defined two-dimensional way of a second scatterable and/or free-flowing plastic material (8) in a defined pattern design using a pattern template (4) onto the plastic melt (1) consisting of the first plastic material (12),
and
- calendaring / calibrating the thickness of the plastic melt (1) and simultaneously at least partially impressing the second plastic material (8) which is applied two-dimensionally and in a pattern design into the first plastic material (12) by means of a calendar arrangement (5, 6, 7),
- cooling the melt into a solid plastic film, wherein
for applying the second plastic material (8) the second plastic material (8) is available as granulate, powder, grit or particle mixture, wherein the particle size of the second plastic material (8) corresponds on average
- to the end thickness of the plastic film (1),
or
- up to a maximum of 50% greater and/or a minimum of 70% smaller than the end thickness of the plastic film (1).

2. Film production process according to claim 1, **characterized in that**, a first plastic material of different color (12) is used as a second plastic material (8).

3. Film production process according to claim 1 or 2, **characterized in that**, the application of the second plastic material (8) onto the plastic melt (1) consisting of the first plastic material (12) takes place by scattering.

4. Film production system for producing an at least two-colored patterned thermally deformable plastic film (1) comprising
(a) a film production assembly of an at least two-colored patterned thermally deformable plastic film (1), in particular with a film production process according to one of the preceding claims having:
- an extruder (2) with a slot die (3) for producing and dispensing a two-dimensional flowable plastic melt (1) made from a first plastic material (12);
- an application and/or scattering device (4) for applying / scattering of a second plastic material (8) onto the plastic melt (1) consisting of the first plastic material (12);
- a calendar arrangement (5, 6, 7) for calibration of the thickness of the film and simultaneously at least partially impressing the second plastic material (8) into the plastic melt (1) which consists of the first plastic material (12),
wherein
- the application and/or scattering device (4) is arranged upstream of the calendar arrangement (5, 6, 7)
and
- the alignment of the plastic melt (1) is horizontal in the area of the application and/or scattering device (4), wherein
- downstream of the extruder die a transport belt arrangement is provided, wherein the extrusion takes place after the transport belt arrangement, and
(b) a first plastic material (12) and a second plastic material (8) which is available as granulate, powder, grit or particle mixture, wherein the particle size of the second of the second plastic material (8) corresponds on average to - the end thickness of the plastic film (1) or - up to a maximum of 50% greater and/or a minimum of 70% smaller than the end thickness of the plastic film (1).

5. Film production system according to the preceding claim, **characterized in that**, the application and/or scattering device has
- a scattering device (4) with a round template (10)
and/or
- a single or double doctor knife assembly.

6. Film production system according to one of the two preceding claims, **characterized in that** the calendar arrangement (5, 6, 7) and the application and/or scattering device (4) are combined, wherein the application and/or scattering device (4) is arranged above the first calendar roll (5) and a second (6) as well as a third calendar roll (7) is provided, in order to perform a thickness calibration, wherein the second (6) and third calendar roll (7) are arranged above one another.

## Revendications

1. Procédé de fabrication de film d'au moins un film plastique (1) thermodéformable à motif au moins bicolore comprenant les étapes suivantes:
- extrusion d'une première matière plastique (12) pour former une matière plastique fondue (1) et application de la matière plastique fondue (1) à partir du premier plastique (12) dans une première épaisseur au moyen d'une buse d'extrudeuse (3)/buse à fente ;
- application sur une zone définie d'une seconde matière plastique diffusable et/ou versable (8) selon un motif défini avec un pochoir de motif (4) sur la matière plastique fondue (1) constituée de la première matière plastique (12),
et
- calandrage/calibrage de l'épaisseur de la matière plastique fondue (1) et simultanément pressage au moins partiellement de la seconde matière plastique (8), qui est appliquée à plat dans le dessin du motif, dans le premier plastique (12) au moyen d'un agencement de calandre (5,6,7),
- refroidissement de la masse fondue en un film plastique solide, la seconde matière plastique (8) étant présente sous forme de granulés, de poudre, de sable ou de mélange de particules pour appliquer la seconde matière plastique (8), la granulométrie moyenne de la seconde matière plastique (8)
- correspondant à l'épaisseur finale du film plastique (1),
ou
- étant jusqu'à maximum de 50% plus grand et/ou un minimum de 70% plus petit que l'épaisseur finale du film plastique (1).

2. Procédé de production de film selon la revendication 1, **caractérisé en ce qu'**une première matière plastique (12) d'une couleur différente est utilisée comme seconde matière plastique (8).

3. Procédé de production de film selon la revendication 1 ou 2, **caractérisé en ce que** la seconde matière plastique (8) est appliquée sur la matière plastique fondue (1) constituée de la première matière plastique (12) par aspersion.

4. Système de production de film pour la production d'au moins un film plastique déformable thermiquement à motif bicolore (1) comprenant
(a) un agencement de production de film d'un film plastique thermiquement déformable (1) avec au moins deux couleurs, en particulier avec un procédé de production de film selon l'une des revendications précédentes, présentant:
- une extrudeuse (2) avec une buse à fente (3) pour produire et décharger une matière plastique fondue plate (1) à partir d'une première matière plastique (12);
- un dispositif d'application et/ou de diffusion (4) pour appliquer/diffuser une seconde matière plastique (8) sur la matière plastique fondue (1) constituée de la première matière plastique (12);
- un agencement de calandre (5, 6, 7) pour calibrer l'épaisseur du film et simultanément presser au moins partiellement la seconde matière plastique (8) dans la matière plastique fondue (1) constituée de la première matière plastique (12),
dans lequel
- le dispositif d'application et/ou de diffusion (4) est disposé avant l'agencement de calandre (5, 6, 7)
et
- l'alignement de la matière plastique fondue (1) dans la zone du dispositif d'application et/ou de diffusion (4) est horizontal, dans lequel
- un agencement de bande transporteuse est prévu après la buse d'extrudeuse, l'extrusion ayant lieu sur l'agencement de bande transporteuse, et
(b) une première matière plastique (12) et une seconde matière plastique (8) présente sous forme de granulés, de poudre, de sable ou d'un mélange de particules, la granulométrie moyenne de la seconde matière plastique (8) correspondant à l'épaisseur finale du film plastique (1), ou étant jusqu'à un maximum de 50% plus grand et/ou un minimum de 70% plus petit que l'épaisseur finale du film plastique (1).

5. Système de production de film selon la revendication précédente, **caractérisé en ce que** le dispositif d'application et/ou de diffusion présente
- un dispositif de diffusion (4) avec un pochoir rond (10) et/ou
- un arrangement de raclette simple ou double.

6. Système de production de film selon l'une des deux revendications précédentes, **caractérisé en ce que** l'agencement de calandre (5, 6, 7) et le dispositif d'application et/ou de diffusion (4) sont combinés, dans lequel le dispositif d'application et/ou de diffusion (4) est disposé au-dessus d'un premier rouleau de calandre (5) et un deuxième (6) ainsi qu'un troisième rouleau de calandre (7) sont prévus pour effectuer un calibrage de l'épaisseur, dans lequel les deuxième (6) et troisième rouleaux de calandre (7) sont disposés l'un au-dessus de l'autre.
